# EUROPEAN PATENT APPLICATION

(11) **EP 4 205 895 A1**
(43) Date of publication of application: **05.07.2023**
(21) Application number: 21862156.3
(22) Date of filing: 31.08.2021
(51) Int. Cl.: B23K 9/173, B23K 9/29, B23K 9/32, B23K 37/00

(54) **WELDING TORCH**

(30) Priority: 31.08.2020 KR 20200110637
(71) Applicant: Chung, Jaiwoo, Yongin-si, Gyeonggi-do 16857 (KR)
(72) Inventor: Chung, Jaiwoo, Yongin-si, Gyeonggi-do 16857 (KR)
(74) Representative: Sach, Greg Robert
(86) International application number: PCT/KR2021/011644
(87) International publication number: WO 2022/045860

(57) **Abstract**

The present invention relates to a welding torch using a shielding gas, and to a welding torch equipped with a amplification nozzle of shielding gas capable of improving the protection role of the welding parts of the shielding gas, wherein the welding torch of this present invention includes: in more detail, the amplification nozzle is installed as an inner nozzle part and an outer nozzle part on the upper and lower parts of gas outlets of the diffuser, the inner nozzle part is installed to be inclined on the welding tip, the external nozzle is partially or entirely opened, wherein the welding torch is characterized by the shielding gas from the gas outlets of the diffuser increases of velocity and decreases of pressure while passing through the amplification nozzle, so that it absorbs surrounding air, and joins the external air introduced through the open parts of the external nozzle to increase the total flow rate, and as the total flow rate continues along the inclination surface(Coanda Surface) where the cross-section increases, the dynamic pressure i.e. velocity decreases and the static pressure increases due to the Coanda effect, therefore the total flow rate continues along the guide part, finally, the total flow rate surrounds uniformly the circumference of the welding parts at the end of the welding tip and forms stably a thick shielding gas layer with the flow rate and the pressure more increasing than the shielding gas from the gas outlets of the diffuser.

## Description

### CROSS-REFERENCE TO RELATED APPLICATIONS

This application claims the benefit of Republic of Korea Patent Application 10-2020-0110637 (filed 31 Aug. 2020), the entire disclosure of which is hereby incorporated by reference herein.

### TECHNICAL FIELD

The present invention relates to a welding torch using a shielding gas, and to a welding torch equipped with a amplification nozzle of shielding gas capable of improving the protection role of the welding parts of the shielding gas.

### BACKGROUND ART

Gas Metal Arc Welding(hereinafter referred to as `GMAW') is a welding method in which an arc is generated between the wire and the base material through a current while supplying a consumption electrode wire acting as a filler to the molten pool at a constant speed. The continuously transmitted wire is melted by high heat of the arc and moves to the molten pool through the arc column, and the molten part is protected from the surrounding atmosphere by spraying a shielding gas supplied from the diffuser through a gas nozzle (hereinafter referred to as `external nozzle').

In other words, the shielding gas blocks molten metal from the atmosphere, ① preventing oxidation and nitrification of metals ② preventing welding defects such as porosity ③ improving welding quality and reducing spatter due to arc stability ④ determinating droplet transfer mode ⑤ improving the durability of the welding torch components. The importance of the shielding gas would be considerable.

The welding method is classified according to the type of shielding gas; MIG(Metal Inert Gas) welding using an inert gas such as argon(Ar) gas, MAG(Metal Active Gas) welding using a gas mixed with Ar gas and carbon dioxide(CO2) gas, CO2 welding using only a pure CO2 gas.

In addition, Gas Tungsten Arc Welding(GTAW) also uses a shielding gas, but has the only difference in using a non-consumable electrode wire(tungsten) and supplying a filler metal separately.

### DISCLOSURE OF INVENTION

### TECHNICAL PROBLEM

As is well known, a windbreak must be installed in a windy outdoor incase a welding method using a shielding gas especially GMAW welding, because the shielding gas does not sufficiently protect the welding parts. In addition, there is a problem that the shielding gas does not perform its function because the welding tip is exposed to the outside more than the external nozzle by cutting the external nozzle or using a short welding tip to secure visibility of the welding tip of the worker even indoors.

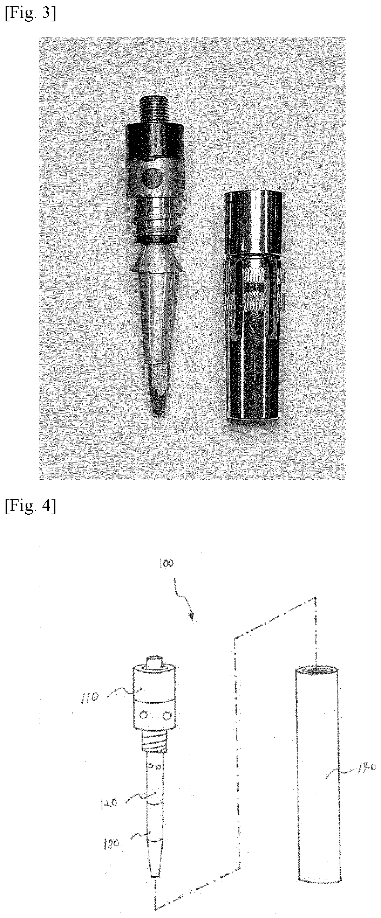

As shown in FIG. 4, a general GMAW welding torch consists of
a diffuser and an external nozzle fastened to an insulator and a welding tip fastened to the diffuser and so in the coupling order, the diffuser(120) is screwed at the top of the insulator(110) and the welding tip(130) is screwed at the bottom of the diffuser(120) and finally, the external nozzle(140) is screwed at the bottom of the insulator(110).

In detail below using the following references (Gas Welding Torch Improvement Study - 53rd National Science Fair).

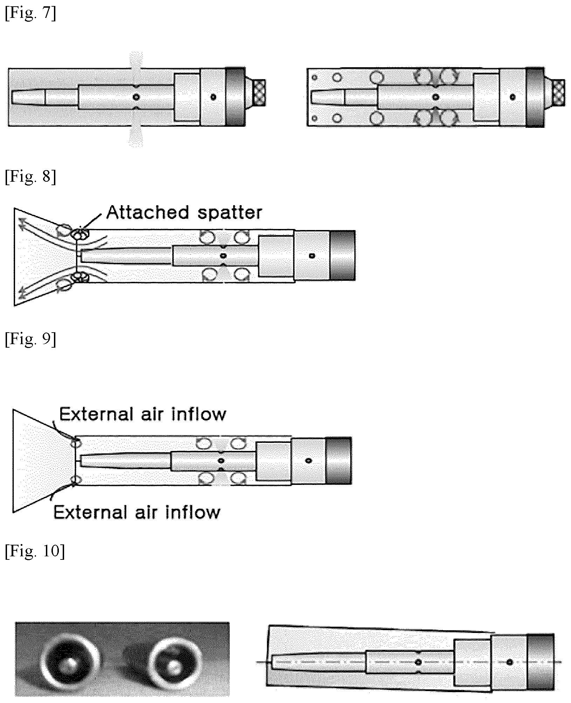

Fig. 7 shows that the shielding gas from the diffuser cannot sufficiently protect the welding parts by generating vortex and forming a non-uniform gas flow inside the external nozzle.

Fig. 8 and Fig. 9 show that external air is introduced from the end of the external nozzle by the vortex inside the external nozzle, and causes welding defects such as oxidation and nitrification of the welding parts, and a spatter(the biggest problem in GMAW welding, being attached to the end of the external nozzle) blocks the gas flow and increases the velocity of flow at the end of the external nozzle, and so in this process, the external air introduced by the vortex hinders the protective function of the shielding gas.

Fig. 10 shows that when eccentricity occurs due to the lack of processing precision in case an external nozzle is generally screw-fastened to the insulator, not only the shielding gas is not evenly distributed on the circumference of the end of the welding tip, but also a clogging problem occurs in narrow gap due to the spatter attachment.

### TECHNICAL SOLUTION

In order to solve the above problem, the welding torch of this present invention using a shielding gas consists of a diffuser(120) and an external nozzle(140) integrated or fastened to an insulator(110) and a welding tip(130) fastened to the diffuser(120), wherein the welding torch is characterized by including: the amplification nozzle(200) is installed as an inner nozzle part(210) and an outer nozzle part(220) on the upper and lower parts of gas outlets(121) of the diffuser(120), the inner nozzle part(210) is installed to be inclined on the welding tip(130), the external nozzle(140) is partially or entirely opened.

In addition, the inner nozzle part(210) and the outer nozzle part(220) of the amplification nozzle(200) through which the shielding gas flows, and the inner surface of the external nozzle(140) are selectively formed with straight or spiral gas guidelines.

### EFFECTS OF INVENTION

The welding torch of this present invention for solving the above problems has the following effects.

First, the shielding gas from the gas outlets of the diffuser joins the external air introduced through the open parts of the external nozzle, and so the total flow rate forms stably a thick shielding gas layer with the flow rate and the pressure increasing, so that the welding parts can be better protected from external wind. Additionally, noise will be reduced due to the stable laminar flow of the shielding gas, and there will be a cooling effect on the torch and welding parts.

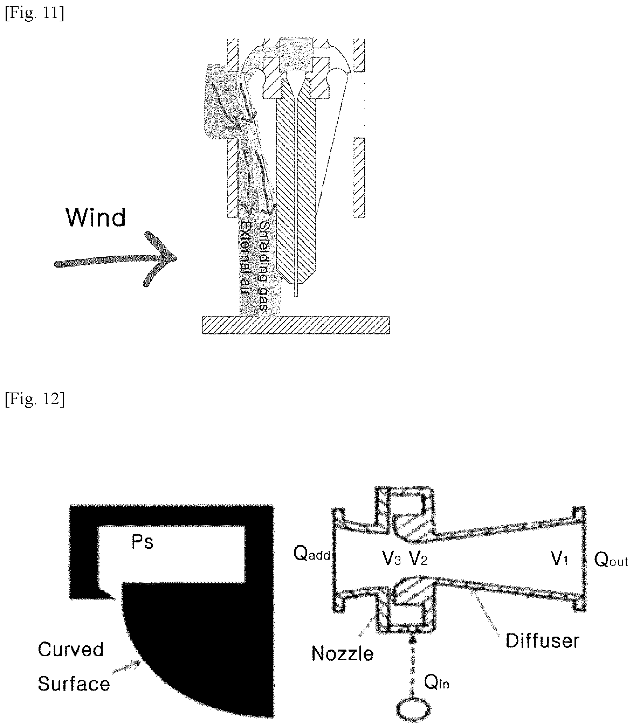

A briefillustration is as Fig. 11.

### <Shielding role by the shielding gas and the external air>

Second, the inner nozzle part(210) and the outer nozzle part(220) of the amplification nozzle(200) through which the shielding gas flows, and the inner surface of the external nozzle(140) are selectively formed with straight or spiral gas guidelines, therefore making the flow of the shielding gas more stable and laminar, and maintaining the flow of the shielding gas for a longer time at the welding parts, and so it is possible to maximize the effectiveness of the same shielding gas flow rate. In addition, when the effect of the spiral gas guideline is maximized, spatters generated at the welding do not bounce toward the welding tip but bounce out of the circumference due to a whirlwind effect.

Third, since a part or all of the external nozzle are opened, its main function can be limited to the function of an insulation guide considering safety unlike before, and it can be made shorter than a welding tip, therefore, it provides visibility into the welding tip to the worker and is free from the attachment of a spatter(that is a chronic cleaning problem of the external nozzle) as well as eccentricity in coupling with an insulator. This is because the shielding gas uniformly forms a layer around the welding parts at the end of the welding tip as it proceeds along the inner nozzle part of the amplification nozzle that is in close contact with the diffuser and the welding tip. Therefore, the shape and material of the external nozzle can be free and it is possible to reduce weight and cost by using an inexpensive material such as thermosetting resin, not a metal material. In addition, the diffuser may be configured without the external nozzle or the insulator, or without both, so that the diffuser length may be configured to be a minimum length as long as there is no problem in the configuration of the gas outlets.

Fourth, the welding torch can use gas for a variety of purposes such as cooling gas(e.g. nitrogen gas) separately instead of the external air introduced through additional pipelines installed on the open parts opening a part or all of the external nozzle. When using the heterogeneous gas as described above, attention should be paid to each flow rate, pressure, and external nozzle shape together with the shielding gas.

Fifth, since the above effect are ultimately shown as the arc stability and the reduction of spatter which are the final purpose of the shielding gas, welding quality as well as durability of welding torch parts(especially welding tips) are improved, therefore it is expected to contribute greatly to the problem of productivity improvement due to reduction of non-operating time which is the biggest concern of robot welding automation and high current systems. In other words, each facility of modern robot welding automation will require a new system with durability for long-term use which dramatically reduces non-operating time.

The effects of this present invention are not limited to the above-mentioned effects, and other effects that are not mentioned will be clearly understood by those skilled in the art from the description of the claims.

### BRIEF DESCRIPTION OF THE DRAWINGS

FIG. 1 is a separate perspective view of a welding torch provided with an amplification nozzle of shielding gas according to an embodiment of the present invention.
FIG. 2 is a cross-sectional view of Fig. 1 when combined.
FIG. 3 is a real picture of the welding torch shown in FIG. 1.
FIG. 4 is a separate perspective view of a general GMAW welding torch.
FIG. 5 is a variety of embodiments a, b, and c of the external nozzle of a welding torch provided with an amplification nozzle of shielding gas according to an embodiment of this present invention.
FIG. 6 is a separate perspective view of a welding torch in which a gas guide line is formed in inner nozzle part of an amplification nozzle of shielding gas according to an embodiment of this present invention.
FIG. 7 is a illustration showing uneven gas flow when using existing external nozzle.
FIG. 8, FIG. 9 are illustrations showing problems caused by external air inflow and spatter attachment when using existing external nozzle.
FIG. 10 is a illustration showing problems caused by eccentricity when using existing external nozzle.
FIG. 11 is a illustration showing the role of shielding the external wind caused by shielding gas and external air when using a welding torch equipped with a amplification nozzle of shielding gas according to an embodiment of this invention.
FIG. 12 is a illustration of the Coanda effect of air flowing through the nozzle along the curved surface.

### BEST MODE FOR CARRYING OUT THE INVENTION

Hereinafter, embodiments of this present invention will be described in detail by referring to the attached drawings so that those having ordinary skill in the art may easily implement this present invention. However, this present invention may be implemented in various different forms and is not limited to the embodiments described herein.

The basic principle of this present invention is to use the Coanda effect, a flow phenomenon that flows along a curved surface, and since the pressure near the highspeed fluid flows is low, the surrounding fluid is drawn into this flow and the flow rate increases, therefore it uses the principle of decreasing the dynamic pressure and increasing the static pressure of the flow rate by increasing the cross-sectional area of the flow path, and is characterized by consisting of an amplification nozzle of shielding gas and an inclination surface(Coanda Surface).

For example, from Fig. 12 if Ps' air passes through the nozzle and flows at high speed along the curved surface due to the Coanda effect, the pressure is lower and the flow rate of Qadd is absorbed, and as the cross-sectional area increases, the speed decreases and the pressure increases.

It has been studied and patented in various ways using the above principles: Air Supercharger for Engines (Korean Patent Rejection, 1020070044550)-quote: U.S. Patent Publication No. 5402938, Internal Combustion Engine (Korean Patent Registration, 1020070086730), Turbocharger (Korean Patent Registration, 1020070086731), Fluid Amplifier (Korean Patent Registration, 1020100044071), Fan without Wings (Korean Patent Registration, 1020117006901), etc.

The configuration of a welding torch with an amplification nozzle and an inclination surface(Coanda Surface) in accordance with this present invention will be described in detail with reference to the attached drawings as follows.

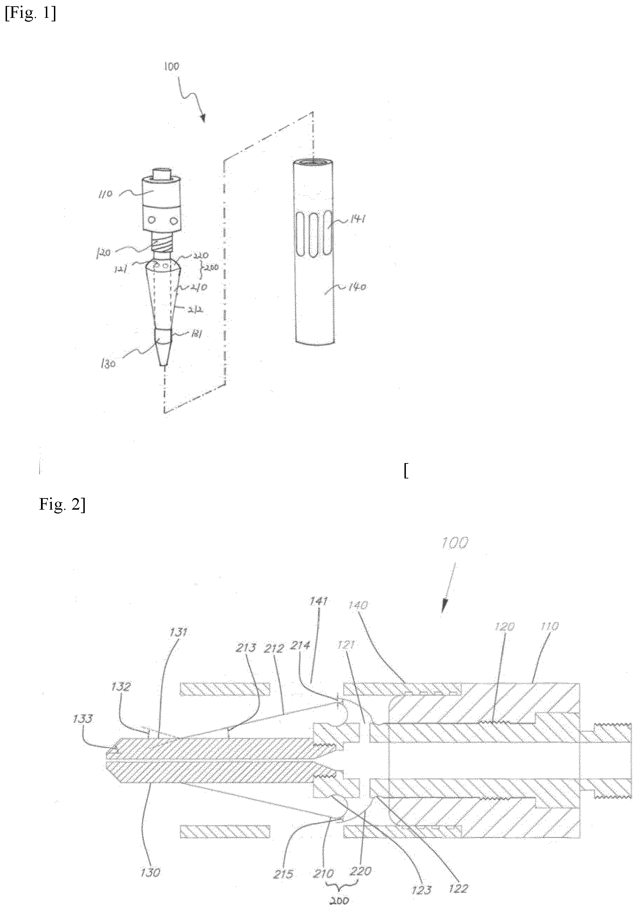

As shown in Fig. 1 or Fig. 2, the welding torch of this present invention consists of
a diffuser(120) and an external nozzle(140) integrated or fastened to an insulator(110) and a welding tip(130) fastened to the diffuser(120), wherein the welding torch includes : the amplification nozzle(200) is installed as an inner nozzle part(210) and an outer nozzle part(220) on the upper and lower parts of gas outlets(121) of the diffuser(120), the inner nozzle part(210) is installed to be inclined on the welding tip(130), the external nozzle(140) is partially or entirely opened, wherein the welding torch is characterized by the shielding gas from the gas outlets(121) of the diffuser(120) increases of velocity and decreases of pressure while passing through the amplification nozzle(200), so that it absorbs surrounding air, and joins the external air introduced through the open parts(141) of the external nozzle(140) to increase the total flow rate, and as the total flow rate continues along the inclination surface(Coanda Surface) where the cross-section increases, the dynamic pressure i.e. velocity decreases and the static pressure increases due to the Coanda effect, therefore the total flow rate continues along the guide part, and so by straightness toward the welding parts is secured, the total flow rate surrounds uniformly the circumference of the welding parts at the end of the welding tip(130) and forms stably a thick shielding gas layer with the flow rate and the pressure more increasing than the shielding gas from the gas outlets(121) of the diffuser(120), wherein the welding torch serves to enable work even in a windy external environment.

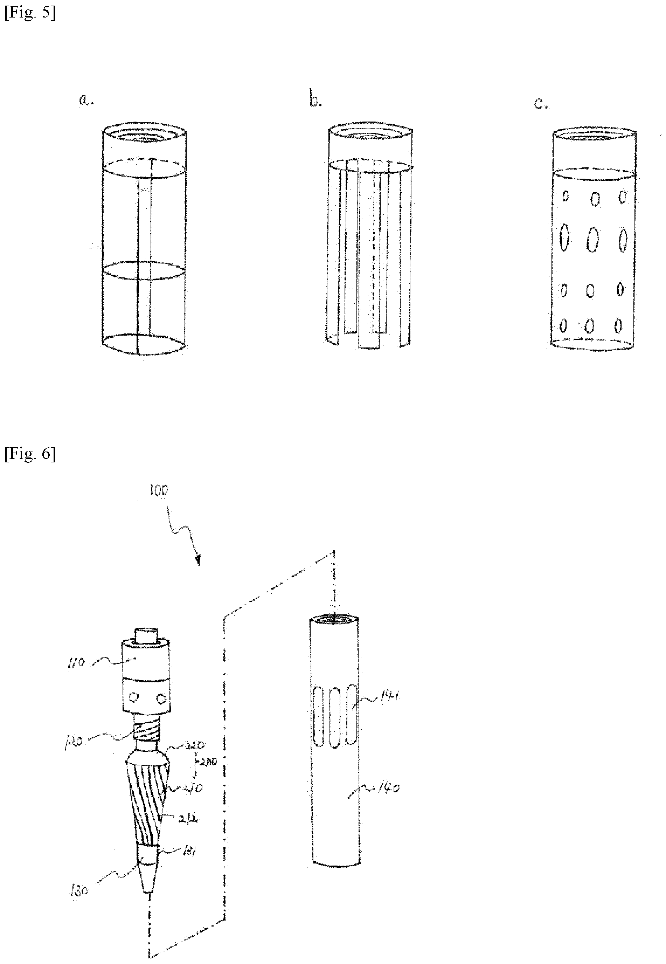

In addition, the inner nozzle part(210) and the outer nozzle part(220) of the amplification nozzle(200) through which the shielding gas flows, and the inner surface of the external nozzle(140) are selectively formed with straight or spiral gas guidelines, thereby making the flow of the shielding gas more stable and laminar, and maintaining the flow of the shielding gas for a longer time at the welding parts, so that it is possible to maximize the effectiveness of the same shielding gas flow rate. As shown in FIG. 6, the gas guideline may be formed in an engraved shape or a protruding embossed shape, and may be designed in consideration of operator's convenience of use. In addition, when the effect of the spiral gas guideline is maximized, spatters generated at the welding parts do not bounce toward the welding tip but bounce out of the circumference due to a whirlwind effect.

As shown in FIG. 1 or FIG. 2, , the external nozzle (140) of this present invention is
when the shielding gas from the gas outlets(121) of the diffuser(120) increases of velocity while passing through the amplification nozzle(200), its main function unlike the prior can be limited to a function only as an insulating guide in consideration of safety. However, depending on the type of shielding gas and welding conditions, the external nozzle(140) of a certain portion corresponding to the inclination surface(Coanda Surface, 212) of the inner nozzle part(210) may be sealed.

Also, as shown in FIG. 5 a, b and c, the external nozzle(140) of this present invention is

FIG. 5a shows a shape in which all of it are opened to maintain only a cylindrical frame for insulation, FIG. 5b shows a linear shape alternating opening and closing, and FIG. 5c shows a shape with multiple openings in several places, wherein the open parts(141) of it can be formed fully as well as partially as shown in Fig. 1 and so like the existing external nozzle shape, all shapes efficient for work such as some tapered shapes will be possible.

In addition, the welding torch can use gas for a variety of purposes such as cooling gas(e.g. nitrogen gas) separately through additional pipelines installed on the open parts(141) opening a part or all of the external nozzle(140) instead of introduced air. When using the heterogeneous gas as described above, attention should be paid to each flow rate, pressure, and external nozzle shape together with the shielding gas.

As shown in FIG. 1 or FIG. 2, the amplification nozzle(200) of this present invention is
installed as an inner nozzle part(210) and an outer nozzle part(220) on the upper and lower parts of gas outlets(121) of the diffuser(120), and the inner nozzle part(210) is installed to be inclined(inclination surface, Coanda Surface, 212) on the welding tip(130), wherein when unfolded(or opened), it looks like a fan-shaped(or fanwise), and as one embodiment it may be configured as an integral type or a separate type, and is made up of a thin plate metal with spring force to facilitate fastening and separating from the diffuser(120) and the welding tip(130) so that the operator can easily attach and detach it, and to adjust the gap(214) between the inner nozzle part(210) and the outer nozzle part(220), the protrusions(215) on the inner nozzle part(210) can be positioned at regular intervals on the cylinder. Locking grooves(122, 123) are formed on the diffuser(120), and ends of the inner nozzle part (210) and the outer nozzle part(220) are manufactured in a hemispherical shape so as to be positioned in the locking grooves(122, 123). The gap(214) is preferably 0.2 to 2.0 mm for general vehicle and heavy equipment welding with a current of 600 A or less. Although the gap(214) may vary depending on the type of shielding gas and welding conditions, it becomes an important factor in determining the total flow rate surrounding the welding parts by introducing the surrounding air.

As shown in FIG. 1 or FIG. 2, the inclination angle(213) of the inclination surface(Coanda Surface, 212) on the inner nozzle part of this present invention is
selected so that the shielding gas passing through the amplification nozzle(200) may flow efficiently due to the Coanda effect. It will be closely related to the material and surface roughness of the inclination surface(Coanda Surface, 212) and the type of shielding gas. If the inclination angle(213) is small, the flow of the shielding gas will maintain a high speed and its pressure is lower than the surrounding air even when reaching the guide part(131), so that the possibility of causing turbulent flow increases due to introducing the surrounding air, or if the inclination angle is big, it will be lost the Coanda effect and may be emitted from the inclination surface(Coanda Surface, 212). In other words, the inclination angle becomes an important factor in determining the speed and pressure of the total flow rate including the shielding gas and the introduced air. It is preferably 5 to 30 degrees.

As shown in FIG. 1 or FIG. 2, the guide part(131) of the welding tip(130) ensures
straightness toward the welding parts while maintaining the total flow rate including the shielding gas and the introduced air in a stable and uniform laminar, so that the total flow rate surrounds uniformly the circumference of the welding parts, wherein the welding torch serves to enable work even in a windy external environment. It is preferably 5 to 15 mm. However, in some cases, the inclination angle(132) may be given as + (upper) or - (lower). In other words, if the welding parts is widely protected due to the sufficient flow rate, + inclination angle can be given.

As shown in FIG. 1 or FIG. 2, the welding tip angle(133) of the welding tip(130) is
may be 90 degrees, but it is usually an acute angle, wherein it may preferably be a obtuse angle of 45° or more so that the shielding gas may continue to go straight along the guide part, that is, the Coanda effect is not generated.

## Claims

1. A welding torch using a shielding gas consists of a diffuser(120) and an external nozzle(140) integrated or fastened to an insulator(110) and a welding tip(130) fastened to the diffuser(120),
wherein the welding torch includes: the amplification nozzle(200) is installed as an inner nozzle part(210) and an outer nozzle part(220) on the upper and lower parts of gas outlets(121) of the diffuser(120), the inner nozzle part(210) is installed to be inclined (inclination surface, 212) on the welding tip(130), the external nozzle(140) is partially or entirely opened.

2. The welding torch of claim 1,
wherein through additional pipelines installed on the open parts(141) opening a part or all of the external nozzle(140), the welding torch(100) supplies cooling gas separately instead of introduced air.
